# EUROPÄISCHE PATENTSCHRIFT

(11) **EP 3 721 140 B1**
(45) Veröffentlichungstag und Bekanntmachung des Hinweises auf die Patenterteilung: **27.09.2023**
(21) Anmeldenummer: 18825562.4
(22) Anmeldetag: 04.12.2018
(51) Int. Cl.: F24C 15/10, H05B 6/12

(54) **ANORDNUNG MIT ZWEI ODER MEHR GESCHICHTETEN PLATTEN AUS NATURSTEIN**
ARRANGEMENT WITH TWO OR MORE LAYERED NATURAL STONE SLABS
DISPOSITIF À DEUX OU PLUSIEURS PLAQUES STRATIFIÉES EN PIERRE NATURELLE

(30) Priorität: 04.12.2017 DE 202017006231 U
(43) Veröffentlichungstag der Anmeldung: 14.10.2020
(73) Patentinhaber: Kuse, Kolja, 81925 München (DE)
(72) Erfinder: Kuse, Kolja, 81925 München (DE)
(86) Internationale Anmeldenummer: PCT/EP2018/000543
(87) Internationale Veröffentlichungsnummer: WO 2019/120601

(56) Entgegenhaltungen:
- EP-A1- 0 637 898
- WO-A1-97/30567
- WO-A1-2005/072013
- WO-A1-2010/043697
- DE-U1-202015 002 866
- JP-A- 2007 020 789

## Beschreibung

Die vorliegende Erfindung bezieht sich auf eine Entwicklung, das Kochen auf Steinplatten bzw. Steingutplatten wie Naturstein, Kunststein wie Beton oder anderen mineralischen Materialien wie z.B. glashaltigem Material oder Keramik zu realisieren, im weiteren Verlauf überbegrifflich zusammenfassend "Steinplatten" genannt. Gemäß dem Stand der Technik werden dabei unterhalb der Oberfläche von Steinplatten Induktionsspulen angeordnet, welche mit einem relativ hochfrequenten Wechselstrom durchflossen werden, welcher elektromagnetische Energie in einen magnetisierbaren Metalltopf - normalerweise aus ferromagnetischem Material bestehend - überträgt, welcher sich oberhalb des durch den Wechselstrom erzeugten Wechselfeldes befindet, wodurch die magnetisierbaren Dipole des ferromagnetischen Topf-Materials, die sogenannten Elementarmagnete oder Weiß'schen Bezirke, des magnetisierbaren Metalls des Topfes im Takt des Wechselfeldes einer Hysterese folgend umgepolt werden und die Umpolung der elementaren Dipole je nach Topfmaterial durch Wirbelströme überlagert wird, wobei ca. 1/3 der Induktionsleistung durch die Umpolung der elementaren Bezirke in Reibungs-Wärme im Topfmaterial gewandelt wird und die übrigen 2/3 der Energie in Form gerichteter Wirbelströme in die Topfoberfläche induziert wird, welche kreisförmig alternierend im Topfmaterial fließen, wobei dann Wärme entsteht, wenn der elektrische Widerstand (ohmscher Widerstand) des Topfmaterials hinreichend groß ist, bzw. grösser ist als der Widerstand der Induktionsspule, die üblicherweise aus Kupferdraht besteht und damit einen deutlich kleineren spezifischen Widerstand hat, als ferromagnetisches Topfmaterial. Der Topf wird durch die beiden Mechanismen der Wirbelströme und die Umpolung der Elementarmagnete so heiß, daß je nach Topfbeschaffenheit Temperaturen im Topfboden von über 400°C entstehen können. Das Verhältnis der beiden Wärme-Erzeugungsmechanismen hängt von der Topfdicke und der genauen Zusammensetzung des Topfmaterials ab. Im Extremfall wird die Energie fast ausschließlich durch Wirbelströme erzeugt.

Die Schwierigkeiten Naturstein als Oberfläche für Induktionsherde zu nutzen wurde durch vorausgehende Entwicklungen teilweise gelöst, indem der Stein mechanisch gegen das Reißen geschützt wird, so wie bereits 1994 in der EP 94 10 7945.1 geschrieben. Ungelöst sind einerseits die nach wie vor extrem hohen Temperaturen, die beim induktiven Kochen im Topfboden entstehen können, denn entgegen der landläufigen Meinung handelt es sich beim induktiven Kochen nicht um so genanntes "kaltes" Kochen, im Gegenteil erreichen Töpfe und Pfannen an der Topfunterseite die gleichen oder unter Umständen noch höhere Temperaturen als auf konventionellen Kochfeldern mit Wärmeübergang durch direkten Materialkontakt eines zu erhitzenden Topfes mit einem Heizfeld.

Die Hauptschwierigkeit jedoch besteht darin die Steinplatte daran zu hindern, an der Kochfeldoberfläche Haarrisse auszubilden. Das komplette Durchreißen oder Durchbrechen der Steinplatten, welches durch die punktuelle Aufwärmung der Steinplatte durch den sich erhitzenden Topf entsteht, wurde durch Einsatz von Carbonfasern gelöst, wie in EP 94 10 7945.1 beschrieben, wodurch die zentrischen Ausdehnungskräfte kontrollierbar werden, die ausgehend vom Topfmittelpunkt entstehen und die bei steigender Temperatur irgendwann so groß werden, dass der Stein auf diese Zugkräfte nur durch geeignete Stabilisierungsmaßnahmen mit ganzflächiger Carbonbewehrungsschicht vorbereitet werden kann, um am Komplettversagen durch Reißen gehindert zu werden. Andere Maßnahmen, wie das Einbringen von Gewindestangen sind völlig unzulänglich, um das Durch-Reißen der Steinplatte zu verhindern, wobei das Durchreißen durch das punktförmige Aufheizen des Kochtopfes und das damit verbundenen Ausdehnens des Steinmaterials bzw. den dadurch in der Kochzone entstehenden Druck erzwungen wird, der im Randbereich eine unzulässige Zugbelastung bewirkt, weil das Material in diesem Bereich kalt bleibt und sich nicht wie das Material in der Kochzone ausdehnt. Die durch diese Temperaturdifferenz entstehende Überschreitung der Zugbelastung im Randbereich ist die Initial-Zone für das Durchreißen der gesamten Steinplatte. Die Maßnahme einer groß- bzw. ganzflächigen Beschichtung der Steinplatten mit Carbonfasern, bzw. das Einbringen einer Mittelschicht aus Carbon zwischen zwei Steinplatten, verhindert zwar das Durchreißen der Steinplatte und die Riss-Initialzündung im Randbereich, aber sie verhindert noch nicht notwendigerweise die Ausbildung von Haarrissen an der Oberfläche der oberen Steinplatte, wozu die in dieser Anmeldung geschriebenen Maßnahmen dienen.

Die geeignetste Maßnahme der grundsätzlichen Stabilisierung gegen Durchreissen der Seinplatten ausgehend vom Randbereich erfolgt auch aus heutiger Sicht nach wie vor, so wie in der EP 94 10 7945.1 beschrieben, am besten durch eine flächige Verklebung von Carbonfasergewebe zwischen zwei Steinplatten, welche den Stein grundsätzlich am Reißen hindert und trotz der entstehenden Ausdehnungskräfte im Prinzip zusammenhält, wobei zwei gleich starke Granitplatten mit Hilfe eines in der Mittelschicht der Gesamtanordnung ganzflächig bzw. großflächig liegenden Carbonfasergewebes bewehrt werden, welches stark genug ausgelegt ist, um das Durchreißen der Granitplatte zu verhindern. In der EP 94 10 7945.1 wird das Induktionsspulengebilde in einem dafür ausgefrästen Hohlraum unterhalb der Steinplatte vollständig mit einem Vergußmittel ausgefüllt. In der hier vorliegenden Erfindung wird die Ausfräsung im Unterschied dazu möglichst offen gelassen, damit Wärme durch Zwangs-Luftzirkulation abgeführt werden kann.

Ein großes Problem ist dabei - wie sich in weiteren Versuchen bei der Umsetzung der EP 94 10 7945.1 herausgestellt hat - , dass die Vergußmittel im Bereich der Kochzone so heiß werden, dass sie den hohen Temperaturen durch das Kochen bzw. Braten, die selbst unterhalb der Steinplatte entstehen und ohne weiteres die 200°C Grenze überschreiten und über längere Kochzeiten 300°C erreichen können, dauerhaft nicht gewachsen sind. Aus diesem Grund muss die Kochzone luftgekühlt werden, und in diesem Fall in Folge auch anders gegen Schlag oder Krafteinwirkung von oben stabilisiert werden, da die mechanisch stabilisierende Wirkung des Vergußmittels wegfällt. Die Aussparung der Platte unterhalb der Kochzone, welche die durchgehend stabilisierende Carbonschicht, die auch keinen Temperaturen von weit über 200°C standhält, notwendigerweise in der Kochzone unterbrechen muss, muss nunmehr direkt unterhalb der Kochzone gegen Bruchkräfte und Schlagkräfte von oben geschützt werden. Aus diesem Grund werden zwei Maßnahmen getroffen: erstens wird eine Bogenkonstruktion in Form einer konkav gewölbten Unterseite der Steinplatte geschaffen, welche die notwendige mechanische Stabilisierung durch Druck von oben realisiert. Diese konstruktive Maßnahme wird insbesondere deshalb nötig, weil der Abstand zwischen Induktions-Spule und Topf möglichst klein sein soll, wofür die Steinschichtdicke in diesem Bereich einerseits möglichst dünn sein und andererseits die Steinschicht im Kochfeldbereich ausreichend stabil bleiben muss.

Zusätzlich bzw. alternativ dazu kann in diesem Bereich, um die nötige Schlagzähigkeit zu erreichen, eine geeignete Gewebe-Schicht eingebracht werden, die in diesem Bereich mit einem Spezialhaftstoff an der Steinunterseite befestigt wird, der Temperaturen bis mindestens 400 °C dauerhaft standhält, wie zum Beispiel hochtemperaturbeständige Lacke, die einerseits gut auf dem porösen Steinmaterial haften und andererseits die Gewebefasern kraftschlüssig umschließen. Auf Grund der hohen Temperaturen in diesem Bereich sind die üblichen CFK-Verbundwerkstoffe - welche zum Beispiel für den Verbund der beiden Steinplatten mit der zwischenliegenden Carbonschicht

Verwendung finden - noch nicht geeignet.

Weiterer relevanter Stand der Technik kann in den Dokumenten EP 0 637 898, WO 97/30567 A1 und DE 20 2015 002866 U1 gefunden werden.

Idealerweise werden aber für alle Stabilisierungsmaßnahmen, sowohl für die Bewehrung der aufgedoppelten Steinplatten, als auch die Stabilisierung des Steins unterhalb der Kochzone Carbonfasern verwendet, weil diese einerseits in der Lage sind die höchsten Zugkräfte auszunehmen, dabei andererseits eine geringe Zugdehnung und gleichzeitig einen geringeren Temperaturausdehnungskoeffizienten als Naturstein besitzen, sowie generell einen geringeren Temperaturausdehnungskoeffizienten als die aller anderen kommerziell erwerblichen Faserarten, was letztlich in Summe eine hohe Steifigkeit der Gesamtkonstruktion bedeutet, auch dann, wenn die belastende Temperaturerhöhung der oberen Steinschicht ins Spiel kommt. Diese Eigenschaften-Kombination macht speziell die Carbonfaser für diese Art von Stabilisierungs-Anwendung ideal bzw. einzigartig geeignet. Glasfasern beispielsweise haben einen größeren Temperaturausdehnungskoeffizienten als Naturstein. Möglich wird die temperaturbedingte haarrissfreie Ausdehnung des Steins, ohne dass die obere Steinschicht nach oben ausbeult jedoch nur dann, wenn ein Stein gewählt wird, der den nötigen Ausdehnungsraum in seiner eigenen kristallin-porösen Struktur findet, was bei dieser Erfindung zu einer notwendigen technischen Voraussetzung für deren Gelingen wird. Ersatz weise können unter Umständen auch Glasfasern oder Steinfasern zum Einsatz kommen, denn eine Schwierigkeit in diesem Zusammenhang besitzen Carbonfasergewebe bei dieser Art der Anwendung, denn herkömmliche 0°/90° Gewebestrukturen nehmen induktive Energie durch Wirbelströme auf, die in einem elektrisch geschlossenen Fasergewebe fließen können, da die Carbonfaser elektrisch leitfähig ist und einen sehr hohen ohmschen Widerstand besitzt. Das bedeutet, dass die üblichen Carbongewebe im Bereich der Steinplatte unterhalb der Kochzone zur Stabilisierung keine Verwendung finden können, da die Induktionsenergie der Spule einerseits durch ein Carbonfasergeflecht gedämpft werden würde und deshalb nur schlecht durch diese Carbonschicht wirken kann und dieses Geflecht sich in Folge selbst stark aufheizt, was unerwünscht ist, da die Wärme im Topfboden erzeugt werden soll, und nicht in der Faserschicht, was zudem zu einer unerwünschten Aufheizung der Steinschicht, sowie der für solche Temperaturen nicht ausgelegten Harze der CFK-Struktur, führen würde.

Dieses Problem wird dadurch gelöst, daß die zur Stabilisierung des Steins verwendete Carbonschicht im Bereich der Kochzone unterbrochen, bzw. ausgefräst wird, wobei anschliessend im Bereich der Kochzone entweder andere Fasern als Carbonfasern verwendet werden, oder ersatzweise auch nur Glasfasern oder die etwas steifere Basaltfaser (Steinfasern) zum Einsatz kommen, da diese einen ähnlich kleinen Temperaturausdehnungskoeffizienten hat wie Stein. Da in diesem Bereich Temperaturen erreicht werden, die keine herkömmlichen CFK- oder GFK-Verbiinde aus Epoxidharzen zulassen, muss die stabilisierende Faserschicht in diesem Bereich mit temperaturstabilen Klebemitteln angebracht werden, welche zwar nicht die mechanische Stabiliät wie Epoxydharze aufweisen, aber ausreichend stabil an dieser Stelle sind und insbesondere einer Dauertemperatur von mindestens 300°C dauerhaft standhalten.

In der EP 94 10 7945.1 findet sich jedoch insbesondere keine Lehre zu der Frage, in welcher Ebene die Carbonschicht oder Faserschicht zwischen den Steinplatten angebracht werden sollte, außer, wie in den Zeichnungen von EP 94 10 7945.1 nahegelegt, in einer symmetrischen Anordnung, bei der die beiden durch die Carbonschicht getrennten Steinschichten gleich dick oder dünn sind. Diese Anordnung verhindert zwar das Durchreißen der Steinplatten, jedoch nicht die Wölbung der Gesamtanordnung und damit verbundene Haarrissbildung an der Oberfläche der oberen Steinplatte, da die Steifigkeit der oberen Platte der Gesamt-Anordnung immer grösser sein muss, als die Steifigkeit der Platte unterhalb der Carbonschicht. Dies wäre zwar dann nicht der Fall, wenn an der Unterseite ein wesentlich steiferer Stein zum Einsatz käme, diese Lehre gibt die EP 94 10 7945.1 jedoch nicht her. Die Gesamtanordnung wölbt sich durch die Ausdehnungskräfte an der Oberfläche ohne geeignete Gegen-Maßnahmen so stark, dass die zulässige Zugspannung des Steins an der Oberfläche zumindest soweit überschritten wird, dass Haarrissbildung die Folge ist. Der Grund ist die mangelhafte mechanische Gegenstabilisierung Stabilisierung im Bereich der Ausfräsung durch das Vergußmittel, welches den hohen Temperaturen nicht standhält und gemäß der Lehre aus der hier vorliegenden Anmeldung zugunsten der Zwangskühlung durch Luft ganz weichen muss und damit auch die Frage nach dem Verhältnis der Steifigkeiten der Materialanordnungen oberhalb und unterhalb der Zug-aufnehmenden Carbonschicht gestellt werden muss. Die Fragestellung nach der zulässigen Zugspannung an der Oberfläche und einer ausreichenden Gegenstabilisierung unterhalb der zugsteifen Carbonschicht ist - das haben weitergehende Versuche auch gezeigt - von entscheidender Bedeutung für die Vermeidung von Haarrissbildung an der Kochfeldoberfläche. Es hat sich gezeigt, dass eine eingehendere Betrachtung der Dimensionierung der Steinschichtdicken notwendig zum Gelingen der Gesamtanordnung ist, und zwar im Hinblick auf die Rissbildung an der Oberfläche solcher Anordnungen und die Vermeidung der riss-ursächlichen Krümmung der Oberfläche durch die gewaltigen Ausdehnungskräfte, die beim Kochen an der Oberfläche der Gesamtanordnung entstehen, welche durch die steife und extrem zugfeste Carbonschicht zwar gezwungen wird zusammenzuhalten, jedoch nicht notwendigerweise dabei hilft, daß die Oberfläche so eben bleibt, daß feinste Rissbildung an der Oberfläche der oberen Steinschicht verhindert wird. Notwendig wird eine technisch ausreichende Auslegung der Verhältnisse der Plattenstärken von oberer und unterer Steinplatte, also der Dicke der Steinplatte oberhalb der zugsteifen Carbonschicht im Verhältnis der gegenstabilisierenden unteren Steinplatte unterhalb der Carbonschicht, um eine Biegung der Gesamtanaordnung und die insbesondere damit verbundene Haarrissbildung an der Oberfläche zu unterbinden. Die geringste Haarrissbildung ist aus optischen und aus hygienischen Gründen zu 100% zu vermeiden. Damit die Herdoberfläche auch dann so eben bleibt, dass Haarrissbildung vermieden wird - wenn die Druckkräfte an der Oberfläche durch die Ausdehnung des Materials beim Kochen groß werden und andererseits eine ausreichende Gegenstabilisierung auf der Unterseite zu gewährleisten ist, obwohl der Stein im Spulenbereich und damit auf der gesamten Spulenfläche ausgefräst ist - müssen die Biegekräfte über die Randzonen - also die Bereiche zwischen der Ausfräsung und den Rändern der gesamten aufgedoppelten Bereichen der Platte - unter Kontrolle gehalten werden, weshalb die untere Steinschicht - zumindest im Bereich dieser Randzonen - über einen entsprechenden Querschnitt verfügen muss, der in der Lage ist den entsprechenden Gegendruck zu erzeugen, um eine übermäßige Wölbung der Oberfläche der Gesamtanordnung zu vermeiden. Die wesentliche Neuerung bei dem hier vorgeschlagenen Aufbau ist die Idee, diesen Kräfteausgleich dadurch zu erreichen, dass die Dicke der Steinschichten unterhalb und oberhalb der Carbonschicht unterschiedlich dimensioniert werden, und zwar so, dass die Platte an der Oberfläche quasi keine merkliche Krümmung erfährt, jedenfalls keine solche, die eine Überschreitung der zulässigen Zugspannung des Steinmaterials an der Oberfläche zur Folge hätte. Aus diesem Grund sollte die untere Steinschicht stärker - also in der Regel dicker - ausgelegt sein, als die obere Steinschicht. Je grösser der Quotient aus oberer zu unterer Steinschichtdicke, um so geringer die Durchbiegung, bzw. umso steifer die Gesamtanordnung, was die Haarrissbildung an der Oberfläche vermeidet. Helfend kommt dazu, dass sich ein geeigneter Stein mit hinreichend hoher Porosität unter Druck in gewissen Grenzen volumen-komprimieren lässt, und zwar in den Grenzen seiner natürlichen kristallinen Porosität. Damit ist es de facto möglich den so genannten Bi-Metalleffekt zu unterdrücken und durch ein jeweils geeignetes Verhältnis von unterer zu oberer Steinschichtdicke die Krümmung der Oberfläche, wie auch ein Beulen der Oberfläche in der relativ dünnen Kochzone - auch bei intensivem Kochen - de facto zu vermeiden, bzw. in einem Bereich zu halten, der die Zugbelastbarkeitsgrenze der Steinoberfläche nicht überschreitet, um somit Haarrissbildung vollständig auszuschließen. Die Grenzen dieser Belastbarkeit von unterschiedlichen Steinen - für die Ermittlung geeigneter Steinsorten - und das optimale oder hinreichende Verhältnis der Steinschichtdicken oberhalb und unterhalb der zugbewehrenden Carbonschicht - in Abhängigkeit gewünschter Geometrien bzgl. Anordnung, Anzahl, Dichte und Größe von mehr oder weniger dicht beieinanderliegenden Kochzonen - lässt sich heutzutage bequem mit modernen rechnergestützten Simulationswerkzeugen basierend auf Finite Elemente Programmen - der FEM-Simulation - realisieren. Entscheidend ist, dass das Verhältnis der sich ausdehnenden Steinmasse an der Oberfläche im Bereich der Kochzone - bzw. der Querschnitt des Steinmaterials im Bereich der Kochzone oberhalb der stabilisierenden Carbonschicht - durch ausreichende Steinmasse unterhalb der Carbonschicht - bzw. dem Querschnitt des Materials in den Randbereichen - in einem Verhältnis ist, welches keine Überschreitung der zulässigen Zugspannung an der Steinoberfläche der Gesamtanordnung erlaubt. Auf diese Weise kann die Haarriss-Bildung an der Kochfeldoberfläche ausgeschlossen werden. Grundsätzlich kann gesagt werden, dass die Steifigkeit der unteren Stabilisierungsplatte in jedem Fall grösser sein muss, als die der Oberflächenplatte.

Nunmehr wirken die speziellen Eigenschaften der Carbonfasern oder nunmehr auch anderen Fasern wie Steinfasern oder Glasfasern und die speziellen Eigenschaften von geeignetem porösen Stein in idealer Weise zusammen, um das gewünschte Ergebnis einer - makroskopisch gesehen - Unterdrückung der Gesamtausdehnung der Anordnung bei gleichzeitiger Unterdrückung des Beulens der Steinoberfläche zu erzielen.

In der Praxis hat sich ein Verhältnis der Dicken der beiden Steinplatten von 1:2 als die sichere Seite erwiesen, wenn der aufgedoppelte Randbereich im Verhältnis zum Durchmesser der Ausfräsung breit genug gewählt wird. Ein Verhältnis von 2:3 der Steindickenverhältnisse liegt im Grenzbereich, jedoch bei den meisten Steinsorten dann noch auf der sicheren Seite, wenn die durch die untere Steinplatte stabilisierten Randbereiche im Verhältnis zum Durchmesser der Ausfräsung im Bereich der Kochzone hinreichend breit sind. Ein Sonderfall kann dann erzielt werden, wenn oberhalb der Carbonschicht, also auf der Sichtseite der Gesamtanaordnung, ein Stein mit einer höheren Porosität, als auf der Unterseite verwendet wird. Der Stein auf der Unterseite mit der geringeren Porosität hat in der Regel auch eine höhere Steifigkeit und Druckbelastbarkeit. In diesem Fall kann ein Steindickenverhältnis von 1:1 auch ausreichen, um Haarrissbildung zu vermeiden, wenn die Randbereiche ausreichend breit sind im Verhältnis zum Durchmesser der Ausfräsung in Bereich der Kochzone. Als hinreichend porös haben sich zum Beispiel feinkristalline Gabbrogesteine erwiesen, die ohne Rissbildung volumenkomprimierbar sind und die für diese Anwendung notwendige hohe Druckstabilität besitzen.

Die Kochzonen werden unterstützend von unten gekühlt, um die zeitlich abhängige Temperaturentwicklung zu drosseln. Zusätzlich können Abstandhalter zwischen Topf und Kochfeldoberfläche durch Luftzirkulation basierend auf natürlicher Konvektion für eine weitere Temperaturreduktion sorgen. Außerdem kann erzwungene Luftführung oberhalb der Kochfeldoberfläche für einen zusätzlichen Abtransport von Warmluft, und damit für zusätzliche Kühlung sorgen.

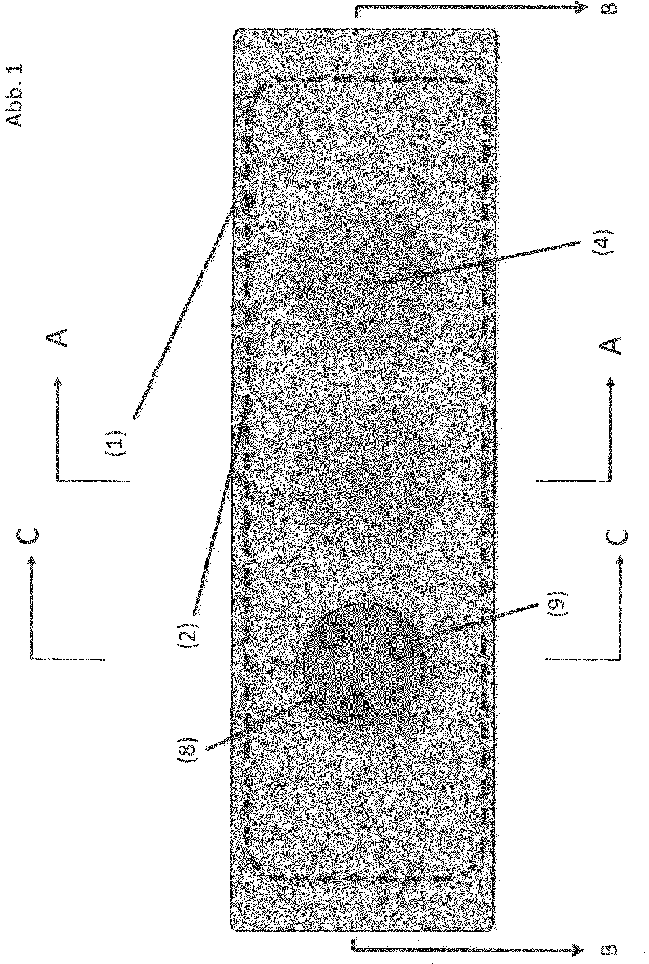

Eine der vielen möglichen Ausführungen der Erfindung beschreibt in Abbildung 1 eine Steinplatte (1) als Herdoberfläche und eine zweite darunterliegende stabilisierende Platte aus Stein (2) mit Ausfräsungen (4) unterhalb der Platten, wobei auf der Platte (1) ein Topf (8) mit Abstandhaltern (9), die am Topfboden befestigt sind, zu stehen kommt.

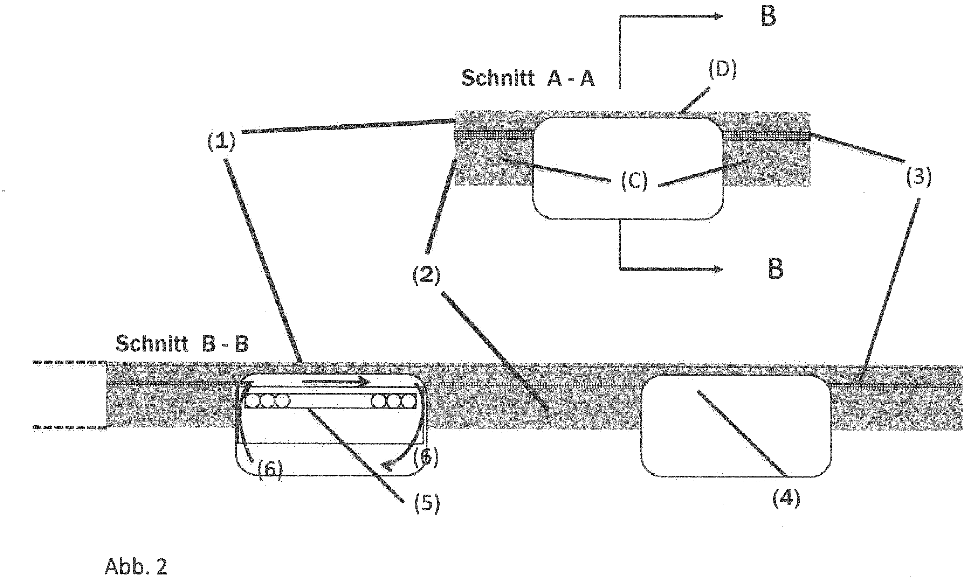

Abbildung 2 zeigt den Aufbau der Abb. 1 im Querschnitt (A-A) mit der die beiden Platten (1) und (2) mechanisch kraftschlüssig verbindenden Carbonschicht (3). Ausfräsungen (4) beherbergen die Induktionsspulen (5), die von einem Luftstrom (6) umströmt werden, um den Stein der Platte (1) im Kochfeldbereich von unten zu kühlen. Die Dicke der unteren Steinplatte ist deutlich größer als die der oberen Steinplatte, in der Form, dass der Querschnitt der Steinplatte in der Kochzone kleiner ist, als der Querschnitt der unteren Platte in den Randbereichen zwischen Ausfräsung und dem äußeren Plattenrand. Zu diesem Zweck ist auch die Breite des Randbereiches im Verhältnis zum Durchmessers der Ausfräsung so bemessen, dass der gegenstabilisierende minimale Querschnitt der unteren Platte im Randbereich (C) (senkrecht von der Ausfräsungsmitte aus auf den langen Plattenrand gesehen) grösser ist, als der Querschnitt der sich ausdehnenden Steinmasse im Bereich der sich erhitzenden Kochzone (D).

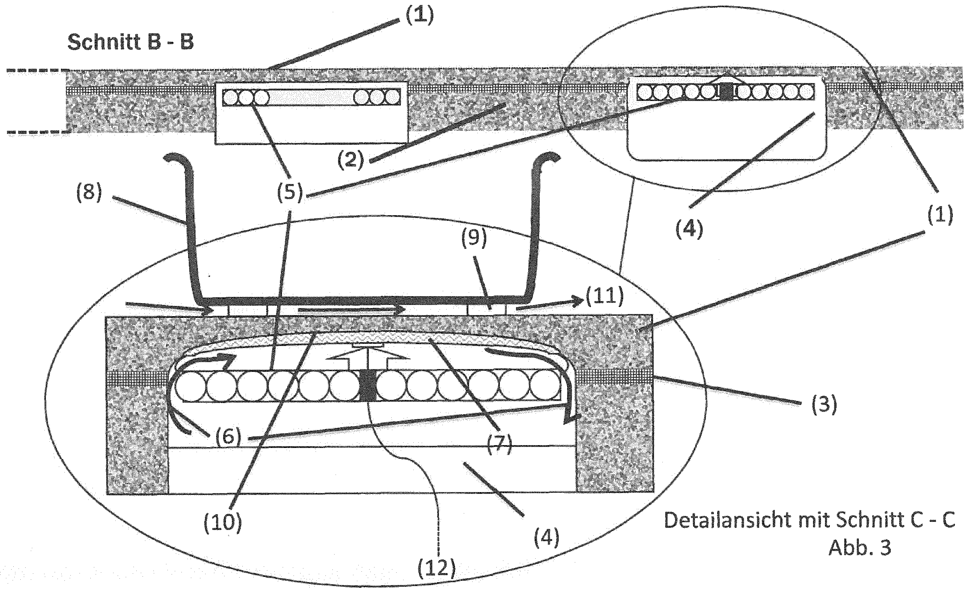

Abbildung 3 zeigt die Ausfräsung (4) mit Spule (5) in Detailansicht mit einer stabilisierenden Faserschicht (7) unter dem Kochfeld und einer rotationssymmetrisch konkav gewölbten Unterseite der Steinplatte (1). Im Bereich der Ausfräsung (4) oberhalb der Platte (1) entwickelt aufgrund des Abstandes zwischen Topf (8) und Platte (1) durch die Abstandhalter (9) unterhalb des Topfes eine natürliche Konvektionsströmung (11) der Umgebungsluft des zum Zweck der zusätzlichen Kühlung der Steinplatte (1) im Kochfeldbereich, deren Temperatur in diesem Bereich mit Hilfe eines Temperatursensors (12) mit Anschlusskabel an die Induktionselektronik angeschlossen gemessen, überwacht und gegebenenfalls geregelt und die Induktion dann zwangsabgeschaltet werden kann, wenn die Temperatur zum Beispiel durch einen leer-überhitzten Topf die Grenzwerte überschreitet.

## Patentansprüche

1. Anordnung mit zwei oder mehr geschichteten Platten (1, 2) aus Naturstein, Kunststein wie Beton oder harzgebundenen Steinmehlen, Glas oder Keramik - im folgenden Steinplatte bzw. Steinplatten genannt - , wobei die Gesamtanordnung der Steinplatten mechanisch über den Querschnitt der Gesamtstruktur durch stabilisierende Fasergewebe-Lagen (3) gegen Überschreitung der zulässigen Zugdehnung stabilisiert ist, wobei sich unter der Oberfläche der oberen Steinschicht eine Ausfräsung befindet, welche die stabilisierende Faserschicht (7) durchbricht und die bis dicht unter die Oberfläche der obersten Steinschicht reicht und innerhalb deren Hohlraum (4) sich eine Induktionsspule (5) zum induktiven Beheizen von magnetisierbarem Induktionsgeschirr befindet,
**dadurch gekennzeichnet, dass** die Steifigkeit der Steingeometrie unterhalb der zugstabilen Faserschicht (7) grösser ist, als die Steifigkeit der Geometrie der oberen Deckschicht, welche die Oberfläche bildet und dass die Fasern aus Carbon-, Glas- oder Steinfasern bestehen.

2. Anordnung nach Anspruch 1, **dadurch gekennzeichnet, dass** das Verhältnis der Dicke der Steinlagen (1, 2) in Bezug auf die Platten-Steifigkeit oberhalb und unterhalb der stabilisierenden Carbonschicht (3) so ausgelegt ist, dass der Querschnitt der sich durch die Temperatur ausdehnenden oberen Steinschicht (1) so viel kleiner ist, als der minimale Querschnitt der unteren Steinplatte (2) im Randbereich zwischen Ausfräsung (4) und Steinplattenrand, dass die zulässige Zugspannung der Oberfläche der obersten Steinschicht (1) auch dann nicht überschritten wird, wenn eine Oberflächen-Temperatur im Bereich der Kochzone von 300°C erreicht wird.

3. Anordnung nach Anspruch 1 und 2, **dadurch gekennzeichnet, dass** die Steinplattenstärke oberhalb der zugstabilen Faserschicht (7) dünner ist, als die Steinplattenstärke unterhalb der zugstabilen Faseraschicht (7).

4. Anordnung nach Anspruch 1 und 2, **dadurch gekennzeichnet, dass** die Steinplattenschicht (1) oberhalb der zugstabilen Faserschicht (7) ein anderes Material ist, als die Steinplattenschicht (2) unterhalb der Faserschicht.

5. Anordnung nach Anspruch 1, 2, und 4, **dadurch gekennzeichnet, dass** die Steinplattenschicht (2) unterhalb der zugstabilen Faserschicht (7) aus einem steiferen Material besteht, als die Steinplattenschicht (1) oberhalb der Faserschicht.

6. Anordnung nach Anspruch 1 bis 5, **dadurch gekennzeichnet, dass** der Hohlraum der Ausfräsung (4) durch einen zirkulierenden Luftstrom (6) gekühlt wird, um die maximal zugelassene Temperatur im Bereich der Kochzone zu regeln und/oder zu begrenzen.

7. Anordnung nach Anspruch 1 bis 6, **dadurch gekennzeichnet, dass** die Unterseite der oberen Steinplatte (1) im Bereich der Ausfräsung (4) eine konkav gewölbte Oberfläche bildet, welche für eine natürliche mechanische Stabilisierung gegen Druck von oben sorgt, um die Platte (1) im Bereich der Ausfräsung gegen Bruch bzw. Durchbruch nach unten hin zu schützen.

8. Anordnung nach Anspruch 1 bis 7, **dadurch gekennzeichnet, dass** die Unterseite der Ausfräsung (4) zusätzlich gegen Bruch durch Schlageinwirkung im Bereich der Kochzone durch eine von unten aufgebrachte Fasermatrixschicht stabilisiert ist, die entweder aus Glas-, Stein- oder Carbonfasern (4,7) und einem temperaturstabilen Haftmittel besteht.

9. Anordnung nach Anspruch 8, **dadurch gekennzeichnet, dass** die faserhaltige Matrix der Faserschicht (4,7) im Bereich der Kochzone Glasfasern, oder Steinfasern (Basaltfasern) oder ein Gemisch dieser unterschiedlichen Fasermaterialien und/oder zwei Lagen UD-Gewebe Carbonfasern in 0°/90° Anordnung enthält, wobei diese beiden Lagen UD-Carbongewebe durch eine Lage Glasfasern oder Steinfasern oder andere Fasern elektrisch gegeneinander isoliert sind, um induzierten Stromfluss im Carbongewebe auszuschliessen.

10. Anordnung nach Anspruch 1 bis 9, **dadurch gekennzeichnet, dass** die Oberfläche der oberen Steinplatte (1) durch ein bis 300°C stabiles Synthetik-Öl gegen das Eindringen von Naturölen geschützt ist.

11. Anordnung nach Anspruch 1 bis 10, **dadurch gekennzeichnet, dass** das verwendete Induktionsgeschirr Abstandhalter enthält, welche eine natürliche Luftkonvektion zwischen der Steinoberfläche (1) und dem Topfmaterial erlauben, um die obere Steinplatte an der Oberfläche zusätzlich zu kühlen, um das Einbrennen von Natur- und Speiseölen zu vermeiden.

12. Anordnung nach Anspruch 1 bis 11, **dadurch gekennzeichnet, dass** die gegenstabilisierende Steinplatte (2) oder die Steinplatten unterhalb der obersten stabilisierenden Carbonschicht in den horizontalen XY-Koordinaten kleiner ausgeführt sind, also die oberste Steinplatte (1).

13. Anordnung nach Anspruch 1 bis 12, **dadurch gekennzeichnet, dass** die Spulenform der gewölbten Form der Ausfräsung (4) angepasst ist und an der Oberfläche selbst eine gewölbte Fläche darstellt.

14. Anordnung nach Anspruch 1 bis 13, **dadurch gekennzeichnet, dass** die Spule (5) in der Mitte einen Temperaturmessfühler (12) trägt, welcher die Temperatur an der Unterseite der - ggfls. faserstabilisierten - Wölbung der Unterseite der oberen Steinplatte (1) misst und dieses Messsignal an das Induktionssteuergerät der Gesamtanordnung der Induktionsheizung, bestehend aus Induktionssteuergerät und Induktionsspule, nebst der notwendigen Kabelverbindung zwischen beiden, weitergibt, so dass die Induktionssteuereinheit bei der Messung bzw. Überschreitung einer unzulässig hohen Temperatur die Induktionsheizung begrenzen oder abschalten kann.

15. Anordnung nach Anspruch 1 bis 14, **dadurch gekennzeichnet, dass** das Verhältnis der Dicke bzw. Steifigkeit der Steinplatte (2) bzw. der Steinplatten unterhalb der obersten Carbonschicht (4) in Relation zur Oberflächenschicht so viel grösser ist, dass die Durchbiegung der Gesamtplatte an der Kochfeldoberfläche de facto Null ist, was dadurch ermöglicht wird, dass ein Steinaufbau mit einer solch hohen Druck-Steifigkeit unter der Carbonschicht verwendet wird, dass der üblicherweise auftretende Bi-Metalleffekt durch die Kompression des Steinmaterials unterhalb der Carbonschicht quasi Null ist, wobei hierzu eine entsprechend und ausreichend stark dimensionierte zugsteife Carbonschicht notwendig ist.

## Claims

1. Arrangement with two or more layered slabs (1,2) of natural stone, artificial stone such as concrete or resin-bonded stone flours, glass or ceramic - hereinafter called stone slab or slabs - wherein the overall arrangement of the stone slabs is mechanically stabilised over the cross-section of the overall structure by stabilising fibre fabric layers (3) against exceeding the permissible tensile elongation, wherein a cut-out is located under the surface of the upper stone layer, which breaks through the stabilising fibre layer (7) and which extends to just below the surface of the upper stone layer and within the cavity (4) of which there is an induction coil (5) for the inductive heating of magnetisable induction dishes, **characterised in that** the stiffness of the stone geometry below the tension-stable fibre layer (7) is greater than the stiffness of the geometry of the upper cover layer which forms the surface and **in that** the fibres consist of carbon, glass or stone fibres.

2. Arrangement according to claim 1, **characterised in that** the ratio of the thickness of the stone layers (1, 2) in relation to the plate stiffness above and below the stabilising carbon layer (3) is such that the cross-section of the upper stone layer (1), which expands due to the temperature, is so much smaller than the minimum cross-section of the lower stone plate (2) in the edge region between the milled-out portion (4) and the stone plate edge that the permissible tensile stress of the surface of the upper stone layer (1) is not exceeded even if a surface temperature in the region of the cooking zone of 300°C is reached.

3. Arrangement according to claim 1 and 2, **characterised in that** the stone slab thickness above the tension-stable fibre layer (7) is thinner than the stone slab thickness below the tension-stable fibre layer (7).

4. Arrangement according to claim 1 and 2, **characterised in that** the stone slab layer (1) above the tension-stable fibre layer (7) is a different material than the stone slab layer (2) below the fibre layer.

5. Arrangement according to claim 1, 2 and 4, **characterised in that** the stone slab layer (2) below the tension-stable fibre layer (7) consists of a stiffer material than the stone slab layer (1) above the fibre layer.

6. Arrangement according to claim 1 to 5, **characterised in that** the cavity of the cut-out (4) is cooled by a circulating air flow (6) in order to regulate and/or limit the maximum permitted temperature in the area of the cooking zone.

7. Arrangement according to claim 1 to 6, **characterised in that** the underside of the upper stone plate (1) forms a concave curved surface in the area of the cut-out (4), which provides a natural mechanical stabilisation against pressure from above, in order to protect the plate (1) in the area of the cut-out against breakage or break-through towards the bottom.

8. Arrangement according to claim 1 to 7, **characterised in that** the underside of the milled-out area (4) is additionally stabilised against breakage by impact in the area of the cooking zone by a fibre matrix layer applied from below, which consists of either glass, stone or carbon fibres (4,7) and a temperature-stable adhesive.

9. Arrangement according to claim 8, **characterised in that** the fibre-containing matrix of the fibre layer (4,7) in the region of the cooking zone contains glass fibres, or stone fibres (basalt fibres) or a mixture of these different fibre materials and/or two layers of UD fabric carbon fibres in 0°/90° arrangement, these two layers of UD carbon fabric being electrically insulated from one another by a layer of glass fibres or stone fibres or other fibres in order to exclude induced current flow in the carbon fabric.

10. Arrangement according to claim 1 to 9, **characterized in that** the surface of the upper stone plate (1) is protected against the penetration of natural oils by a synthetic oil stable up to 300°C.

11. Arrangement according to claim 1 to 10, **characterised in that** the induction utensil used contains spacers which allow natural air convection between the stone surface (1) and the pot material in order to additionally cool the upper stone plate at the surface to prevent the burning in of natural and cooking oils.

12. Arrangement according to claim 1 to 11, **characterised in that** the counter-stabilising stone plate (2) or the stone plates below the uppermost stabilising carbon layer are made smaller in the horizontal XY coordinates, than the upper stone plate (1).

13. Arrangement according to claim 1 to 12, **characterised in that** the coil shape is adapted to the curved shape of the cut-out (4) and is a curved surface itself on its upper side.

14. Arrangement according to claim 1 to 13, **characterised in that** the coil (5) carries a temperature sensor (12) in the centre which measures the temperature on the underside of the - possibly fibre-stabilised - bulge (4), which measures the temperature on the underside of the - possibly fibre-stabilised - curvature of the underside of the upper stone plate (1) and forwards this measurement signal to the induction control unit of the overall arrangement of the induction heating, consisting of induction control unit and induction coil, together with the necessary cable connection between the two, so that the induction control unit can limit or switch off the induction heating if an impermissibly high temperature is measured or exceeded.

15. Arrangement according to claim 1 to 14, **characterized in that** the ratio of the thickness or rigidity of the stone plate (2) or of the stone plates below the uppermost carbon layer (4) is so much greater in relation to the surface layer that the deflection of the overall plate at the hob surface is de facto zero, which is made possible by using a stone structure with such a high compressive stiffness below the carbon layer that the bi-metal effect which normally occurs due to the compression of the stone material below the carbon layer is virtually zero, a correspondingly and sufficiently strongly dimensioned tensile stiff carbon layer being necessary for this.

## Revendications

1. Agencement avec deux ou plusieurs dalles superposées (1,2) en pierre naturelle, en pierre artificielle telle que le béton ou les farines de pierre liées à la résine, en verre ou en céramique - ci-après dénommées dalle(s) de pierre - dans lequel l'agencement global des dalles de pierre est stabilisé mécaniquement sur la section transversale de la structure globale par des couches de tissu de fibres stabilisantes (3) contre le dépassement de l'allongement de traction admissible, dans lequel une découpe est située sous la surface de la couche de pierre supérieure, qui traverse la couche de fibres stabilisantes (7) et qui s'étend juste en dessous de la surface de la couche de pierre supérieure, Cette découpe traverse la couche de fibres stabilisantes (7) et s'étend juste en dessous de la surface de la couche de pierre supérieure, dans la cavité (4) de laquelle se trouve une bobine d'induction (5) pour le chauffage par induction de plats à induction magnétisables, **caractérisée par le fait que** la rigidité de la géométrie de la pierre sous la couche de fibres stabilisantes (7) est supérieure à la rigidité de la géométrie de la couche de couverture supérieure qui forme la surface, et **par le fait que** les fibres sont des fibres de carbone, de verre ou de pierre.

2. Agencement selon la revendication 1, **caractérisé en ce que** le rapport de l'épaisseur des couches de pierre (1, 2) par rapport à la raideur de la plaque au-dessus et au-dessous de la couche de carbone stabilisant (3) est tel que la section de la la couche de pierre supérieure (1), qui se dilate sous l'effet de la température, est beaucoup plus petite que la section transversale minimale de la plaque de pierre inférieure (2) dans la zone de bord entre la partie fraisée (4) et le bord de la plaque de pierre **en ce que** la contrainte de traction admissible de la surface de la couche de pierre supérieure (1) n'est pas dépassée même si une température de surface dans la région de la zone de cuisson de 300°C est atteinte.

3. Agencement selon les revendications 1 et 2, **caractérisé en ce que** l'épaisseur de la dalle de pierre au-dessus de la couche de fibres stables en tension (7) est plus mince que l'épaisseur de la dalle de pierre sous la couche de fibres stable en tension (7).

4. Agencement selon les revendications 1 et 2, **caractérisé en ce que** la couche de dalles de pierre (1) au-dessus de la couche de fibres stables en tension (7) est un matériau différent de la couche de dalles de pierre (2) sous la couche de fibres.

5. Agencement selon la revendication 1, 2 et 4, **caractérisé en ce que** la couche de dalles de pierre (2) sous la couche de fibres stables en tension (7) est constituée d'un matériau plus rigide que la couche de dalles de pierre (1) au-dessus de la couche de fibres.

6. Agencement selon la revendication 1 à 5, **caractérisé en ce que** la cavité de la découpe (4) est refroidie par un flux d'air circulant (6) afin de réguler et/ou de limiter la température maximale autorisée dans la zone de la zone de cuisson.

7. Agencement selon la revendication 1 à 6, **caractérisé en ce que** la face inférieure de la plaque de pierre supérieure (1) forme une surface incurvée concave au niveau de la découpe (4), qui assure une stabilisation mécanique naturelle contre la pression du dessus , afin de protéger la plaque (1) dans la zone de la découpe contre une casse ou une percée vers le bas.

8. Agencement selon les revendications 1 à 7, **caractérisé en ce que** la face inférieure de la zone fraisée (4) est en outre stabilisée contre la casse par choc au niveau de la zone de cuisson par une couche de matrice fibreuse appliquée par le dessous, qui consiste en soit des fibres de verre, de pierre ou de carbone (4,7) et un adhésif thermostable.

9. Agencement selon la revendication 8, **caractérisé en ce que** la matrice fibreuse de la couche fibreuse (4,7) au niveau de la zone de cuisson contient des fibres de verre, ou des fibres de roche (fibres de basalte) ou un mélange de ces différentes fibres matériaux et/ou deux couches de fibres de carbone en tissu UD disposées à 0°/90°, ces deux couches de tissu en carbone UD étant isolées électriquement l'une de l'autre par une couche de fibres de verre ou de fibres de pierre ou d'autres fibres afin d'exclure le courant induit flux dans le tissu de carbone.

10. Agencement selon les revendications 1 à 9, **caractérisé en ce que** la surface de la plaque de pierre supérieure (1) est protégée contre la pénétration des huiles naturelles par une huile synthétique stable jusqu'à 300°C.

11. Agencement selon la revendication 1 à 10, **caractérisé en ce que** l'ustensile à induction utilisé contient des entretoises qui permettent une convection naturelle de l'air entre la surface de pierre (1) et le matériau du pot afin de refroidir en plus la plaque de pierre supérieure en surface pour empêcher la brûlage d'huiles naturelles et de cuisson.

12. Agencement selon les revendications 1 à 11, **caractérisé en ce que** la plaque de pierre contre-stabilisante (2) ou les plaques de pierre sous la couche de carbone stabilisatrice supérieure sont rendues plus petites dans les coordonnées horizontales XY que la plaque de pierre supérieure (1).

13. Agencement selon la revendication 1 à 12, **caractérisé en ce que** la forme de bobine est adaptée à la forme courbe de la découpe (4) et est une surface courbe elle-même sur sa face supérieure.

14. Agencement selon les revendications 1 à 13, **caractérisé en ce que** la bobine (5) porte en son centre un capteur de température (12) qui mesure la température sur la face inférieure du renflement (4 éventuellement fibré stabilisé), qui mesure la température sur la face inférieure de la courbure - éventuellement fibrée - de la face inférieure de la plaque de pierre supérieure (1) et transmet ce signal de mesure à l'unité de commande à induction de l'agencement global du chauffage par induction, composé d'une unité de commande à induction et bobine d'induction, ainsi que la connexion de câble nécessaire entre les deux, de sorte que l'unité de commande d'induction puisse limiter ou désactiver le chauffage par induction si une température élevée non autorisée est mesurée ou dépassée.

15. Agencement selon la revendication 1 à 14, **caractérisé en ce que** le rapport de l'épaisseur ou de la rigidité de la plaque de pierre (2) ou des plaques de pierre sous la couche de carbone supérieure (4) est d'autant plus grand par rapport à la couche de surface que la déflexion de l'ensemble de la plaque à la surface de la table de cuisson est de facto nulle, ce qui est rendu possible en utilisant une structure en pierre avec une rigidité à la compression si élevée sous la couche de carbone que l'effet bimétallique qui se produit normalement en raison de la compression de la le matériau pierreux sous la couche de carbone est pratiquement nul, une couche de carbone rigide à la traction de dimension correspondante et suffisamment forte étant nécessaire pour cela.
